Europäisches Patentamt

European Patent Office

Office européen des brevets

(11) Numéro de publication: **0 370 887 B1**

## FASCICULE DE BREVET EUROPEEN

(45) Date de publication de fascicule du brevet: **26.07.95**

(51) Int. Cl.6: **F02K 9/97**, F02K 9/82, F02K 9/88

(21) Numéro de dépôt: **89403196.2**

(22) Date de dépôt: **21.11.89**

(54) **Divergent de moteur-fusée à tuyère annulaire complémentaire.**

(30) Priorité: **21.11.88 FR 8815122**

(43) Date de publication de la demande:
**30.05.90 Bulletin 90/22**

(45) Mention de la délivrance du brevet:
**26.07.95 Bulletin 95/30**

(84) Etats contractants désignés:
**DE ES GB IT SE**

(56) Documents cités:
| | |
|---|---|
| DE-A- 3 710 984 | FR-A- 2 014 614 |
| FR-A- 2 128 868 | FR-A- 2 250 899 |
| FR-A- 2 568 316 | FR-A- 2 618 488 |
| US-A- 3 216 653 | US-A- 3 267 664 |
| US-A- 3 520 139 | US-A- 3 925 982 |

**JOURNAL OF SPACECRAFT AND ROCKETS.
vol. 6, no. 12, décembre 1969, NEW YORK US
pages 1416-1423; Hosack+Stromsta: "Performance of the Aerobell Extendible Rocket
Nozzle"**

(73) Titulaire: **SOCIETE EUROPEENNE DE PROPUL-
SION
24, rue Salomon de Rothschild
F-92150 Suresnes (FR)**

(72) Inventeur: **Bonniot, Claude E.
11 Rue de Seroux
27140 Gisors (FR)**

(74) Mandataire: **Thévenet, Jean-Bruno et al
Cabinet Beau de Loménie
158, rue de l'Université
F-75340 Paris Cédex 07 (FR)**

EP 0 370 887 B1

# Description

La présente invention a pour objet un divergent pour tuyère de moteur-fusée devant fonctionner dans l'atmosphère puis dans le vide, comprenant une paroi principale constituée par une surface de révolution s'évasant entre un col de tuyère et une extrémité aval de divergent.

Dans les moteurs-fusées, le divergent de la tuyère principale du moteur-fusée sert à transformer en impulsion l'énergie produite dans la chambre de combustion en transformant en énergie cinétique l'énergie potentielle de la pression des gaz de combustion. L'efficacité de cette transformation est d'autant meilleure que le taux de détente du divergent est élevé. Le taux de détente est déterminé par le rapport entre la section de sortie du divergent et la section au col de la tuyère principale.

Pour les moteurs devant fonctionner au sol, c'est-à-dire avec une pression ambiante d'environ un bar, ou en présence d'une contre pression, ce taux de détente est limité par la condition de non décollement du jet dans le divergent qui impose une valeur minimale Pe/Pa du rapport entre la pression Pe à la paroi de l'écoulement du gaz éjecté en sortie du divergent et la pression ambiante Pa. Les divergents classiques des moteurs-fusées fonctionnant à partir du sol ont des rapports de section limités par ce phénomène de décollement. Il en résulte des performances relativement faibles en altitude.

On connait par ailleurs, notamment par les documents FR-A-2 250 899 et US-A-3 267 664 des dispositifs de refroidissement des parois d'une tuyère de moteur-fusée, lesquels dispositifs mettent en oeuvre une circulation d'un faible débit d'ergol le long de la paroi de la tuyère, les gaz issus des circuits de refroidissement étant éjectés à travers de petites tuyères situées à l'extrémité aval de la paroi du divergent. Les débits et pressions de sortie du fluide circulant dans les circuits de refroidissement sont entièrement dépendantes des conditions de combustion dans la chambre et sont optimisés pour assurer une fonction de refroidissement tout en contribuant à créer une légère poussée supplémentaire. Il n'est pas prévu de moyen de faire varier ou d'interrompre les débits des gaz de refroidissement pour une adaptation à la pression ambiante qui varie avec l'altitude, et les documents FR-A-2 250 899 et US-A-3 267 664 n'évoquent pas les problèmes liés au phénomène de décollement de jet dans un divergent de tuyère de moteur-fusée.

L'invention a essentiellement pour but d'augmenter le taux de détente réalisable par divergent devant fonctionner au sol ou en présence d'une contre pression, à l'aide d'un dispositif aisé à mettre en oeuvre.

Ce but est atteint grâce à un divergent pour tuyère de moteur-fusée devant fonctionner dans l'atmosphère puis dans le vide, comprenant une paroi principale constituée par une surface de révolution s'évasant entre un col de tuyère et une extrémité aval de divergent, et une tuyère convergente divergente annulaire complémentaire de faible hauteur qui présente le même axe que celui de la paroi principale, est placée à l'extérieur de ladite paroi principale au voisinage de l'extrémité aval de divergent, et comprend un tore de répartition des gaz qui coopère avec des moyens d'alimentation en gaz pour produire en sortie de la partie divergente de la tuyère annulaire complémentaire un flux de gaz annulaire qui entoure le flux de gaz principal émis à l'extrémité aval de la paroi principale du divergent, lequel flux de gaz annulaire constitue un flux de pression statique $P_s$ sensiblement inférieure à la pression ambiante $P_a$ et dont la valeur est comprise entre environ 0,3 et 0,8 fois la pression ambiante $P_a$, caractérisé en ce que le tore de répartition des gaz se prolonge à sa partie inférieure par une portion rétrécie jouant le rôle de convergent pour la tuyère annulaire complémentaire.

La tuyère annulaire délivre à sa sortie un écoulement à pression statique inférieure à la pression ambiante qui entoure le jet principal lui créant une frontière à pression inférieure à la pression ambiante Pa et autorisant de ce fait une augmentation du taux de détente et du rapport de section possible sans décollement.

La pression à la paroi en sortie du divergent principal peut en principe être diminuée d'environ 60 % et passer d'environ 0,4 bar à 0,16 bar d'où une possibilité d'augmenter le taux de détente du divergent et d'améliorer l'impulsion spécifique dans le vide.

Divers modes de réalisation de l'invention sont possibles.

L'extrémité inférieure de la paroi externe de la tuyère annulaire complémentaire peut être prolongée par un déflecteur dont la concavité est tournée vers l'extérieur, ce qui a pour efffet de créer une dépression locale supplémentaire.

Le tore de répartition des gaz peut comporter des cloisons internes améliorant l'homogénéité de la répartition des gaz.

Selon un mode de réalisation particulier, le col de la tuyère annulaire complémentaire est obturé par une plaque comportant une succession de trous répartis dans la zone annulaire du col de ladite tuyère complémentaire.

Selon un autre mode de réalisation particulier, le col et le divergent de la tuyère annulaire complémentaire sont remplacés par une succession de petites tuyères jointives réparties dans les zones annulaires du col et du divergent de la tuyère annulaire complémentaire munie d'un tore de répartition des gaz.

Lesdits moyens d'alimentation de la tuyère annulaire complémentaire en un flux de gaz peuvent être reliés à une source extérieure dépendant du moteur-fusée lui-même telle qu'un dispositif de prélèvement de gaz dans la chambre principale du moteur-fusée ou dans les échappements de turbines ou de réservoir de gaz pressurisés

Selon une alternative, lesdits moyens d'alimentation de la tuyère annulaire complémentaire en un flux de gaz comprennent une source de gaz autonome alimentant le tore de répartition des gaz à l'intérieur de la tuyère annulaire convergente-divergente.

Dans ce cas, la source de gaz autonome peut comprendre un générateur de gaz par bloc de poudre ou une chambre de combustion annulaire alimentée par un injecteur d'ergols, laquelle chambre de combustion annulaire peut elle-même être incluse dans le tore de répartition des gaz dans la tuyère annulaire complémentaire.

La tuyère annulaire complémentaire peut être largable à l'aide de moyens de séparation tels que cordeau ou boulons explosifs lorsque la pression externe est descendue au-dessous d'un certain seuil.

Selon un mode de réalisation particulier, le divergent comprend une seconde tuyère convergente-divergente annulaire complémentaire de faible hauteur qui est semblable à ladite tuyère annulaire complémentaire et entoure celle-ci pour en renforcer l'effet en créent un écoulement à pression statique $P_i$ inférieure à la pression ambiante $P_a$ et supérieure à la pression statique $P_s$ du flux de gaz annulaire émis par la première tuyère annulaire complémentaire. Cette seconde tuyère complémentaire, en faisant jouer une seconde fois le critère de Summerfield, renforce l'effet de la première tuyère complémentaire.

La tuyère annulaire complémentaire peut être réalisée de différentes manières.

Selon un premier mode de construction possible, la paroi principale externe du divergent constitue une partie de la paroi interne de la tuyère annulaire complémentaire tandis que la paroi externe de ladite tuyère annulaire complémentaire est constituée par une surface de révolution profilée fixée à la paroi principale externe du divergent.

Selon un second mode de construction possible, la tuyère annulaire complémentaire est constituée par une pièce de révolution profilée fixée à l'extrémité inférieure de la paroi principale du divergent et constituant par sa partie interne un prolongement vers le bas de la paroi principale du divergent.

Selon un troisième mode de construction possible, la tuyère annulaire complémentaire est constituée par une pièce profilée indépendante de la paroi principale du divergent, qui entoure la partie inférieure de ladite paroi principale et est fixée au niveau du plan de sortie du divergent.

Dans ce cas, la liaison entre la tuyère annulaire complémentaire indépendante et la paroi principale du divergent peut être renforcée par des pattes de fixation reliant le tore de répartition des gaz avec la paroi principale du divergent.

La tuyère annulaire complémentaire peut être réalisée de façon métallique ou en matériaux composites.

D'autres caractéristiques et avantages de l'invention ressortiront de la description suivante de modes particuliers de réalisation de l'invention, donnés à titre d'exemples en référence aux dessins annexés, sur lesquels :

- la figure 1 est une vue schématique en coupe axiale d'un divergent de tuyère de poussée de moteur-fusée équipé d'une tuyère annulaire complémentaire conformément à la présente invention,
- les figures 2 à 5 représentent en demi-coupe axiale des modes particuliers de réalisation de tuyères annulaires complémentaires métalliques présentant diverses configurations possibles,
- les figures 6 à 8 représentent en demi-coupe axiale des modes particuliers de réalisation de tuyères annulaires complémentaires en matériaux composites présentant différentes configurations possibles,
- la figure 9 montre une vue schématique en demi-coupe axiale d'un exemple de tuyère annulaire complémentaire munie d'une plaque annulaire perforée au niveau de son col,
- la figure 9A est une vue de face d'une partie de la plaque annulaire perforée incorporée dans la tuyère annulaire complémentaire de la figure 9,
- la figure 10 est une vue schématique en demi-coupe axiale d'un exemple de tuyère annulaire complémentaire dans lequel le col et le divergent sont remplacés par une succession de petites tuyères jointives réparties le long du collecteur de la tuyère annulaire complémentaire,
- la figure 11 est une vue en demi-coupe axiale d'un mode particulier de réalisation de l'invention dans lequel deux tuyères annulaires complémentaires coaxiales entourent la partie aval du divergent de la tuyère de poussée du moteur-fusée, et
- la figure 12 est une vue en demi-coupe axiale d'un mode particulier de réalisation de l'invention dans lequel le flux de gaz appliqué à la tuyère annulaire complémentaire est produit par une source de gaz autonome disposée au voisinage du tore de répartition des gaz à l'intérieur de la tuyère annulaire.

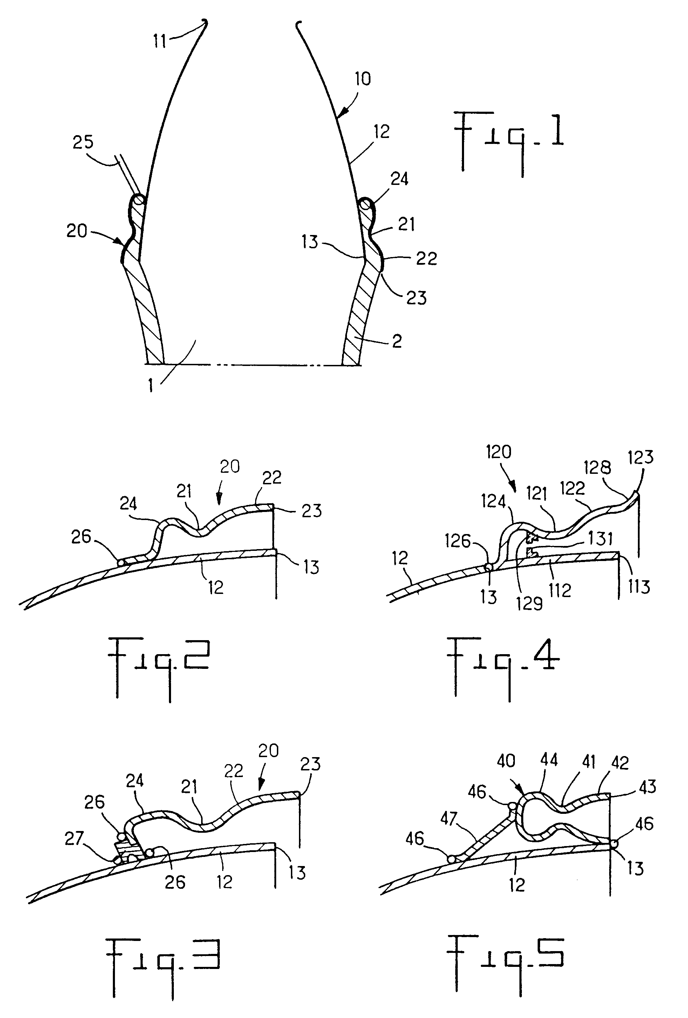

On a représenté de façon schématique sur la figure 1, le divergent d'une tuyère 10 de poussée d'un moteur-fusée, lequel divergent comprend une paroi principale 12 définissant une surface de révolution qui s'évase entre un col de tuyère 11 et une section aval 13 de sortie du divergent.

Comme cela a déjà été indiqué plus haut les divergents classiques des moteurs-fusées fonctionnant à partir du sol ont des rapports de section limités par le phénomène de décollement.

La condition de non-décollement (critère de Summerfield) généralement prise pour assurer le dimensionnement des divergents devant fonctionner au sol est la condition :Pe/Pa > 0,3 ou 0,4 où Pe est la pression à la paroi de l'écoulement du gaz 1 éjecté en sortie 13 du divergent, et Pa est la pression ambiante.

Le respect de cette condition conduit à choisir des sections de sortie de divergent réduites, c'est-à-dire des taux de détente limités qui entraînent des performances relativement faibles en altitude.

Selon la présente invention, il est remédié à cet inconvénient en adjoignant au divergent de la tuyère principale 10 une tuyère annulaire convergente-divergente complémentaire 20 qui présente le même axe que la tuyère principale 10, est placée à l'extérieur de celle-ci, au voisinage de l'extrémité aval 13 du divergent, et est agencée de façon à produire un flux de gaz annulaire 2 entourant celui du divergent principal et de direction voisine.

La tuyère annulaire 20 est réalisée de manière à délivrer à sa sortie 23 un jet de gaz à pression statique Ps inférieure à la pression ambiante Pa qui entoure le jet principal 1 et crée ainsi pour ce jet principal 1 une frontière à pression inférieure à la pression ambiante Pa. La tuyère annulaire périphérique 20 peut ainsi délivrer un jet gazeux 2 à une pression statique intermédiaire Ps égale par exemple à 0,4 bar, c'est-à-dire inférieure à la pression ambiante Pa qui au niveau du sol est de l'ordre de 1 bar, mais autorisant pour la pression Pe du jet de gaz 1 à la paroi 12 en sortie 13 du divergent principal une diminution d'environ 60 % par rapport à la valeur de pression Ps. La pression Pe qui sans la présence de la tuyère annulaire complémentaire 20 devrait présenter une valeur de l'ordre de 0,4 bar peut être ramenée à une valeur de l'ordre de 0,16 bar en présence de la tuyère annulaire complémentaire 20, ce qui permet bien d'augmenter le taux de détente du divergent de la tuyère principale 10 et d'améliorer l'impulsion spécifique dans le vide.

La tuyère annulaire complémentaire 20 comprend un tore 24 de répartition des gaz qui coopère avec des moyens 25 d'alimentation en gaz et se prolonge à sa partie inférieure par une portion rétrécie jouant le rôle de convergent pour la tuyère annulaire complémentaire 20.

Les gaz injectés dans la tuyère annulaire 20 par la canalisation 25 peuvent provenir directement du moteur-fusée, par exemple sous la forme d'un flux de récupération d'un ergol de refroidissement de la paroi du divergent principal (dénommé débit dump), d'un flux de gaz prélevés dans la chambre principale de combustion du moteur-fusée, d'un flux de gaz d'échappement des turbines associées de façon classique au moteur-fusée, ou encore d'un flux de gaz provenant d'un réservoir de gaz pressurisés. Toutefois, les gaz injectés dans la tuyère annulaire 20 peuvent aussi provenir d'autres sources localisées près de cette tuyère, comme cela sera indiqué plus loin en référence à la figure 12.

L'injection de gaz dans la tuyère annulaire 20 et la configuration géométrique de cette tuyère 20 sont telles que le flux de gaz annulaire 2 émis par cette tuyère 20 constitue un flux de pression statique Ps sensiblement inférieur à la pression ambiante Pa et dont la valeur est comprise entre environ 0,3 et 0,8 fois la pression ambiante Pa.

L'injection de gaz dans la tuyère annulaire peut être permanente (depuis le démarrage jusqu'à l'arrêt du moteur) ou bien être interrompue lorsque la pression ambiante à l'altitude atteinte permet un fonctionnement sans décollement du divergent sans écoulement annulaire complémentaire.

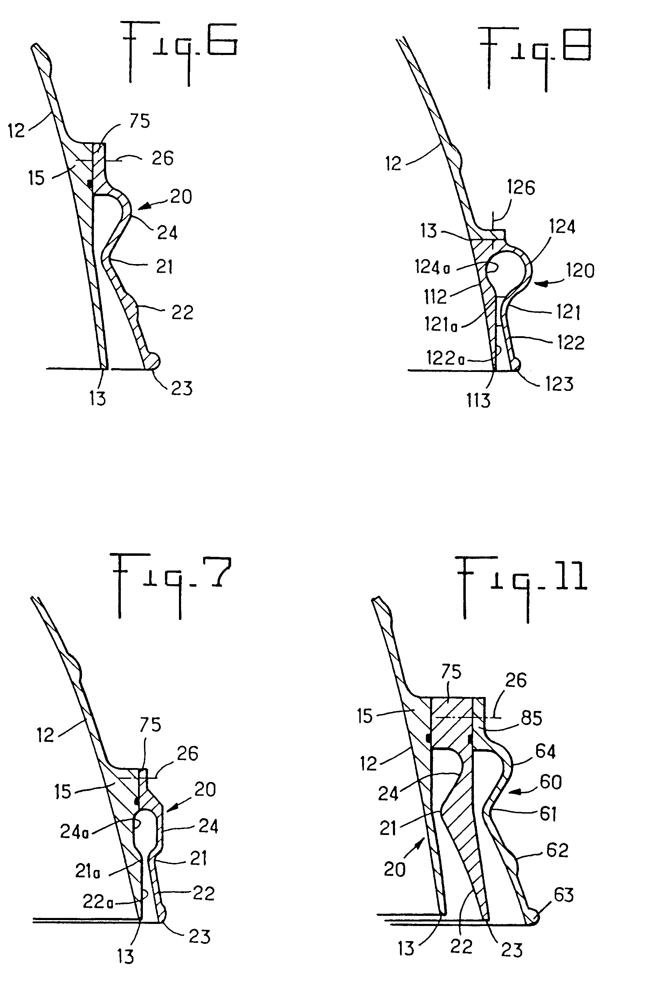

Dans ce cas, la tuyère annulaire 20 peut être largable et des moyens sont prévus pour provoquer une séparation entre la tuyère annulaire 20 et la tuyère principale 10 lorsque la pression externe est descendue au-dessous d'un certain seuil. Ces moyens de séparation peuvent être constitués par des cordeaux ou boulons explosifs classiques 26, 126, 46 (figures 2 et 8 et figures 11, 12) disposés au niveau du raccordement entre la tuyère annulaire complémentaire 20, 120, 40 et la structure du divergent principal.

La tuyère annulaire complémentaire 20, 120, 40 peut être réalisée de façon métallique ou à l'aide de matériaux composites. Les figures 2 à 5, 9, 10 et 12 montrent des exemples de réalisation de tuyères complémentaires métalliques tandis que les figures 6 à 8 et 11 montrent des exemples de réalisation de tuyères complémentaires réalisées en matériaux composites.

Selon un premier mode de réalisation possible (figures 1 à 3 et 6 à 11) la paroi latérale externe 12 du divergent principal constitue une partie de la paroi interne de la tuyère annulaire complémentaire 20 tandis que la paroi externe de cette tuyère annulaire complémentaire 20 est constituée par une surface de révolution profilée fixée directement, ou par l'intermédiaire d'une pièce intercalaire 27, à la paroi externe 12 du divergent principal.

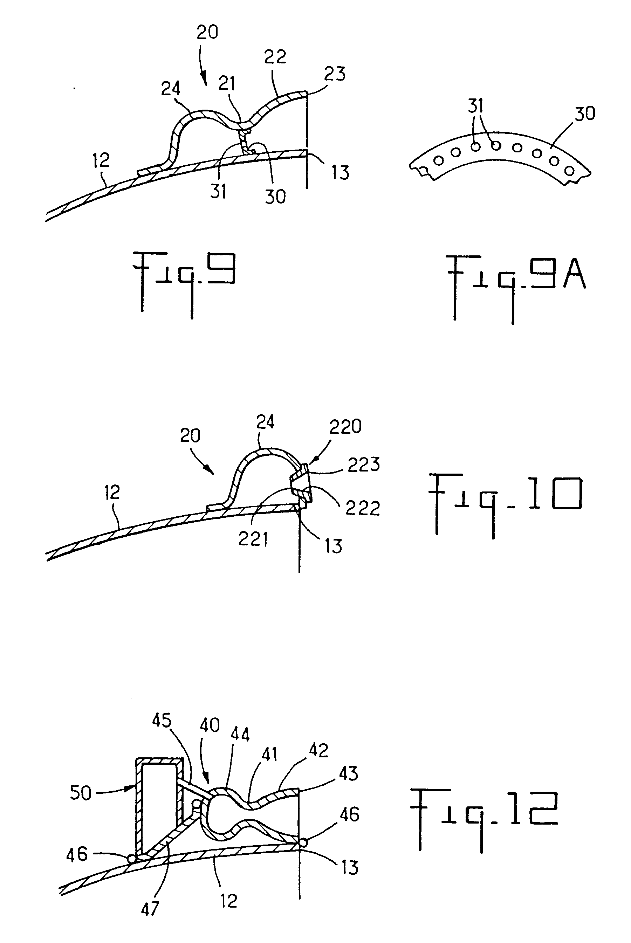

Selon un autre mode de réalisation représenté sur les figures 4 et 8, la tuyère annulaire complémentaire 120 est constituée par une pièce profilée qui est fixée au niveau de la sortie 13 du divergent principal et définit à la fois une partie inférieure interne 112 prolongeant le divergent principal vers le bas avec un nouveau plan de sortie 113, et une tuyère annulaire complémentaire 120 analogue à la tuyère annulaire complémentaire 20 déjà décrite et comprenant un tore de répartition des gaz 124, un col 121 de tuyère complémentaire et un divergent 122 de tuyère complémentaire avec un plan de sortie 123, lesquels éléments 121 à 124 peuvent être tout à fait semblables aux éléments 21 à 24 définissant une tuyère complémentaire 20 en combinaison avec la partie inférieure de la paroi du divergent principal.

Comme cela est représenté sur les figures 5 et 12, la tuyère annulaire complémentaire peut encore être constituée par une pièce 40 tout à fait indépendante du divergent principal et simplement fixée à la paroi latérale externe 12 du divergent principal au niveau du plan de sortie 13 de ce divergent et le cas échéant par des pattes 47 reliant le tore 44 de répartition des gaz à la paroi latérale 12 du divergent principal. Sur les figures 5 et 12, la référence 46 désigne des éléments de liaison qui peuvent être par exemple du type boulons explosifs pour permettre un largage de la tuyère complémentaire 40 quand celle-ci n'est plus utile par suite de la baisse du niveau de la pression ambiante. Toutefois, des liaisons classiques par soudure ou par bride sont également possibles. Les éléments référencés 41 à 44 sur les figures 5 et 12 correspondent aux éléments référencés 21 à 24 sur la figure 2.

Le plan de sortie 23, 123, 43 de la tuyère annulaire complémentaire 20, 120, 40 coopérant avec le divergent principal peut être tel que l'extrémité extérieure de la tuyère annulaire est au même niveau (fig 2) ou au contraire en saillie (fig 3, fig 4) par rapport à l'extrémité 13, 113 de la paroi 12 du divergent principal ou d'un prolongement 112 de cette paroi 12.

Sur la figure 4 on a représenté un mode particulier de réalisation dans lequel l'extrémité inférieure 123 de la paroi externe de la tuyère annulaire complémentaire 120 peut être prolongée par un déflecteur incurvé 128 dont la concavité est tournée vers l'extérieur.

La tuyère annulaire complémentaire 20, 120 peut présenter en demi-coupe axiale une forme symétrique ou quasi-symétrique (figures 7, 8) avec une paroi interne qui constitue la partie inférieure de la paroi latérale 12 du divergent principal, ou un prolongement 112 de cette paroi, et présente une première face sans irrégularités et une deuxième face profilée 24a, 21a, 22a respectivement 124a, 121a, 122a qui contribue à définir la tuyère annulaire complémentaire 20, 120. Toutefois, cette configuration n'est pas absolument indispensable et la paroi interne 12, 112 de la tuyère complémentaire 20, 120 peut également présenter une courbure régulière (figures 2 à 4, 6 et 9 à 11).

Une seconde tuyère annulaire complémentaire 60 semblable à la première tuyère complémentaire 20, 120, 40 et fonctionnant de la même manière peut entourer celle-ci afin de renforcer son effet. On a représenté sur la figure 11 le cas de la mise en oeuvre de deux tuyères complémentaires coaxiales concentriques 20, 60 selon un mode de réalisation semblable à celui de la figure 6, mais une double tuyère complémentaire peut également être mise en oeuvre selon les modes particuliers de réalisation des autres figures.

Sur la figure 11, la seconde tuyère complémentaire 60 présente une bride 85 qui vient porter sur la bride 75 de la première tuyère complémentaire 20 elle-même plaquée contre une partie renforcée 15 de la paroi principale 12 du divergent principal. La pièce profilée définissant la seconde tuyère complémentaire 60 détermine avec la pièce profilée de la première tuyère complémentaire un tore 64 de répartition des gaz, un col sonique 61, un divergent 62 et une section de sortie 63 qui sont analogues aux éléments correspondants 24, 21, 22, 23 de la première tuyère complémentaire 20. Dans le mode de réalisation de la figure 11, c'est toutefois la pression statique Pi à la sortie 63 de la seconde tuyère complémentaire 60 qui doit présenter une valeur comprise entre environ 0,3 et 0,8 fois la pression ambiante Pa tandis que la pression statique Ps en sortie 23 de la première tuyère complémentaire 20 présente elle-même une valeur comprise entre environ 0,3 et 0,8 fois la pression statique Pi à la sortie 63 de la seconde tuyère complémentaire 60.

Le tore 24, 44, 124, 64 de répartition des gaz se prolonge à sa partie inférieure par une portion rétrécie jouant le rôle de convergent pour la tuyère annulaire complémentaire 20, 40, 120, 60 qui présente un col sonique 21, 41, 121, 61. Afin d'améliorer l'homogénéité de la répartition des gaz, le tore 124 peut présenter des cloisins internes 129 (figure 4).

Selon un mode de réalisation particulier illustré sur les figures 9 et 9a, le col annulaire 21 de la tuyère complémentaire 20 n'a pas une ouverture continue mais est obturé par une plaque annulaire perforée 30 comportant une succession de trous 31 visant d'une part à maintenir la section du col à la valeur désirée malgré les dilatations et d'autre part à améliorer l'homogénéité de la répartition des gaz.

La figure 10 illustre un autre mode de réalisation particulier ayant un but semblable à celui de la figure 9, et dans lequel le col annulaire 21 et le divergent annulaire 22 de la tuyère complémentaire 20 sont remplacés par un ensemble de petites tuyères jointives 220 réparties sur tout le pourtour de l'extrémité inférieure 13 de la paroi principale 12 du divergent de la tuyère principale 10. Chaque petite tuyère individuelle 220 présente elle-même un orifice d'entrée 221 semblable aux trous 31 de la plaque perforée 30 et constituant un col sonique, et un divergent 222 qui se termine par un orifice de sortie 223 qui peut être en saillie par rapport à la section de sortie 13 du divergent principal.

La figure 12 montre un exemple de réalisation semblable à celui de la figure 5, mais dans lequel la tuyère complémentaire 40 n'est pas alimentée par un flux de gaz provenant de sources directement liées au moteur-fusée, mais par un flux de gaz introduit par un conduit 45 dans le tore de répartition 44 à partir d'un générateur de gaz auxiliaire autonome 50 disposé au voisinage du tore 44. La source de gaz autonome peut être constituée par un générateur de gaz par bloc de poudre ou par une chambre de combustion annulaire alimentée par un injecteur d'ergols. Dans ce dernier cas, la chambre de combustion annulaire 50 de la figure 12 pourrait être incluse dans le tore 44 de répartition des gaz et ne pas constituer un élément juxtaposé à la tuyère 40.

Naturellement, les différents modes de réalisation qui viennent d'être décrits peuvent se combiner entre eux. Ainsi, l'utilisation d'une source de gaz autonome 50 n'est par exemple pas limitée au mode de réalisation de tuyère complémentaire 40 du type représenté sur la figure 5 mais peut aussi s'appliquer aux modes de réalisation illustrés sur les autres figures.

## Revendications

1. Divergent pour tuyère de moteur-fusée devant fonctionner dans l'atmosphère puis dans le vide, comprenant une paroi principale (12) constituée par une surface de révolution s'évasant entre un col de tuyère (11) et une extrémité aval de divergent (13) et une tuyère convergente-divergente annulaire complémentaire (20; 40; 120) de faible hauteur qui présente le même axe que celui de la paroi principale (12), est placée à l'extérieur de ladite paroi principale (12) au voisinage de l'extrémité aval de divergent (13), et comprend un tore (24; 44; 124) de répartition des gaz qui coopère avec des moyens d'alimentation (25; 45; 50) en gaz pour produire en sortie (23; 43;

123) de la partie divergente (22; 42; 122) de la tuyère annulaire complémentaire (20; 40; 120) un flux de gaz annulaire (2) qui entoure le flux de gaz principal (1) émis à l'extrémité aval (13) de la paroi principale (12) du divergent, lequel flux de gaz annulaire (2) constitue un flux de pression statique $P_s$ sensiblement inférieure à la pression ambiante $P_a$ et dont la valeur est comprise entre environ 0,3 et 0,8 fois la pression ambiante $P_a$, caractérisé en ce que le tore (24 ; 44 ; 124) de répartition des gaz se prolonge à sa partie inférieure par une portion rétrécie jouant le rôle de convergent pour la tuyère annulaire complémentaire (20 ; 40 ; 120).

2. Divergent selon la revendication 1, caractérisé en ce que l'extrémité inférieure de la paroi externe de la tuyère annulaire complémentaire (120) est prolongée par un déflecteur (129) dont la concavité est tournée vers l'extérieur.

3. Divergent selon l'une quelconque des revendications 1 et 2, caractérisé en ce que le tore de répartition des gaz (124) comporte des cloisons internes (129) améliorant l'homogénéité de la répartition des gaz.

4. Divergent selon l'une quelconque des revendications 1 à 3, caractérisé en ce que le col (21) de la tuyère annulaire complémentaire (20) est obturé par une plaque (30) comportant une succession de trous (31) répartis dans la zone annulaire du col (21) de ladite tuyère complémentaire (20).

5. Divergent selon l'une quelconque des revendications 1 à 3, caractérisé en ce que le col (21) et le divergent (22) de la tuyère annulaire complémentaire (20) sont remplacés par une succession de petites tuyères jointives (220) réparties dans les zones annulaires du col et du divergent de la tuyère annulaire complémentaire (20) munie d'un tore (24) de répartition des gaz.

6. Divergent selon l'une quelconque des revendications 1 à 5, caractérisé en ce que lesdits moyens (25) d'alimentation de la tuyère annulaire complémentaire (20) en un flux de gaz sont reliés à une source extérieure dépendant du moteur-fusée lui-même telle qu'un dispositif de prélèvement de gaz dans la chambre principale du moteur-fusée, dans les échappements de turbines ou de réservoir de gaz pressurisés.

**7.** Divergent selon l'une quelconque des revendications 1 à 5, caractérisé en ce que lesdits moyens (45, 50) d'alimentation de la tuyère annulaire complémentaire (40) en un flux de gaz comprennent une source de gaz autonome (50) alimentant le tore (44) de répartition des gaz à l'intérieur de la tuyère annulaire convergente-divergente (40).

**8.** Divergent selon la revendication 7, caractérisé en ce que la source de gaz autonome (50) comprend un générateur de gaz par bloc de poudre.

**9.** Divergent selon la revendication 7, caractérisé en ce que la source de gaz autonome (50) comprend une chambre de combustion annulaire alimentée par un injecteur d'ergols.

**10.** Divergent selon la revendication 9, caractérisé en ce que ladite chambre de combustion annulaire est incluse dans le tore (24; 44) de répartition des gaz dans la tuyère annulaire complémentaire.

**11.** Divergent selon l'une quelconque des revendications 1 à 10, caractérisé en ce que la tuyère annulaire complémentaire (20; 40; 120) est largable à l'aide de moyens de séparation (26; 46; 126) tels que cordeau ou boulons explosifs lorsque la pression externe est descendue au-dessous d'un certain seuil.

**12.** Divergent selon l'une quelconque des revendications 1 à 11, caractérisé en ce qu'il comprend une seconde tuyère convergente-divergente annulaire complémentaire (60) de faible hauteur qui est semblable à ladite tuyère annulaire complémentaire (20) et entoure celle-ci pour en renforcer l'effet en créant un écoulement à pression statique $P_i$ inférieure à la pression ambiante $P_a$ et supérieure à la pression statique $P_s$ du flux de gaz annulaire (2) émis par la première tuyère annulaire complémentaire (20).

**13.** Divergent selon l'une quelconque des revendications 1 à 12, caractérisé en ce que la paroi principale externe (12) du divergent constitue une partie de la paroi interne de la tuyère annulaire complémentaire (20) tandis que la paroi externe de ladite tuyère annulaire complémentaire (20) est constituée par une surface de révolution profilée fixée à la paroi principale externe (12) du divergent.

**14.** Divergent selon l'une quelconque des revendications 1 à 12, caractérisé en ce que la tuyère annulaire complémentaire (120) est constituée par une pièce de révolution profilée fixée à l'extrémité inférieure (13) de la paroi principale (12) du divergent et constituant par sa partie interne un prolongement vers le bas (112) de la paroi principale (12) du divergent.

**15.** Divergent selon l'une quelconque des revendications 1 à 12, caractérisé en ce que la tuyère annulaire complémentaire (40) est constituée par une pièce profilée indépendante de la paroi principale (12) du divergent, qui entoure la partie inférieure de ladite paroi principale (12) et est fixée au niveau du plan de sortie (13) du divergent.

**16.** Divergent selon la revendication 15, caractérisé en ce que la liaison entre la tuyère annulaire complémentaire indépendante (40) et la paroi principale (12) du divergent est renforcée par des pattes (47) de fixation reliant le tore (44) de répartition des gaz avec la paroi principale (12) du divergent.

**17.** Divergent selon l'une quelconque des revendications 1 à 16, caractérisé en ce que la tuyère annulaire complémentaire (20; 40; 120) est métallique.

**18.** Divergent selon l'une quelconque des revendications 1 à 16, caractérisé en ce que la tuyère annulaire complémentaire (20; 40; 120) est réalisée en matériaux composites.

**Claims**

**1.** Expansion nozzle for a rocket engine destined to function successively in atmospheric and space conditions, comprising a main wall (12) constituted by a surface of revolution that splays outwardly between a nozzle throat (11) and a downstream extremity of a expansion nozzle (13), and a complementary annular convergent and divergent nozzle (20; 40; 120) of small vertical extent which has an axis coinciding with the principal axis of said main wall (12), is located outside said main wall (12) in the region of the downstream extremity of said expansion nozzle (13), and comprises a gas distribution torus (24; 44; 124) cooperating with gas flow supply means (25; 45; 50) to produce an annular flow of gas (2) exhausted from (23; 43; 123) the diverging part (22; 42; 122) of the complementary annular nozzle (20; 40; 120), which surrounds the main flow of gas (1) exhausted at the downstream extremity (13) of the main wall (12) of the expansion nozzle, which annular flow of gas (2) constitutes a flow

of static pressure $P_s$ that is substantially lower than the ambient pressure ($P_a$) and having a value of between 0.3 ad 0.8 times the ambient pressure $P_a$, characterized in that the gas distribution torus (24; 44; 124) is prolonged at a lower part thereof by a shrunken portion serving as a converger for the complementary annular nozzle (20; 40; 120).

2. Expansion nozzle according to claim 1, characterized in that the lower extremity of the external wall of the complementary annular nozzle (120) is prolonged by a deflector (129) whose concavity is turned towards the outside.

3. Expansion nozzle according to any one of claims 1 to 2, characterized in that the gas distribution torus (124) comprises internal partitions (129) for improving gas distribution uniformity.

4. Expansion nozzle according to any one of claims 1 to 3, characterized in that the throat (21) of the complementary annular nozzle (20) is closed by a plate (30) comprising a succession of holes (31) distributed in the annular region of the throat (21) of said complementary nozzle (20).

5. Expansion nozzle according to any one of claims 1 to 3, characterized in that the throat (21) and the expansion nozzle (22) of the complementary annular nozzle (20) are replaced by a succession of small contiguous nozzles (220) distributed in the annular regions of the throat and of the expansion nozzle of the complementary annular nozzle (20) provided with a gas distribution torus (24).

6. Expansion nozzle according to any one of claims 1 to 5, characterized in that said gas flow supply means (25) of the complementary annular nozzle (20) are linked to an external source depending from the rocket engine itself, such as a device for drawing off gases in the main chamber of the rocket engine, in the exhausts of the turbines or of the pressurized gas tanks.

7. Expansion nozzle according to any one of claims 1 to 5, characterized in that said gas flow supply means (45, 50) for said complementary annular nozzle (40) comprise a autonomous gas source (50) supplying the gas distribution torus (44) inside the annular convergent and divergent nozzle (40).

8. Expansion nozzle according to claim 7, characterized in that the autonomous gas source (50) comprises a powder block gas generator.

9. Expansion nozzle according to claim 7, characterized in that the autonomous gas source (50) comprises an annular combustion chamber supplied by a rocket fuel injector.

10. Expansion nozzle according to claim 9, characterized in that said annular combustion chamber is included within said gas distribution torus (24; 44) in said complementary annular chamber.

11. Expansion nozzle according to any one of claims 1 to 10, characterized in that the complementary annular nozzle (20; 40; 120) is dumpable by means of separation devices (26; 46; 126), such as explosive fuse or bolts when the external pressure has dropped to below a predetermined threshold.

12. Expansion nozzle according to any one of claims 1 to 11, characterized in that it comprises a second complementary annular convergent and divergent nozzle (60) of small vertical extent that is substantially similar to said complementary annular nozzle (20) and surrounds the latter, to reinforce the effect thereof by creating a flow at a static pressure $P_i$ that is lower than the ambient pressure $P_a$ and greater than the static pressure $P_s$ of the annular gas flow (2) exhausted by the first complementary annular nozzle (20).

13. Expansion nozzle according to any one of claims 1 to 12, characterized in that the main external wall (12) of the expansion nozzle forms part of the inner wall of the complementary annular nozzle (20) whereas the external wall of said complementary annular nozzle (20) is constituted by a profiled surface of revolution fixed to the main external wall (12) of the expansion nozzle.

14. Expansion nozzle according to any one of claims 1 to 12, characterized in that the complementary annular nozzle (120) is constituted by a profiled element of revolution fixed to the lower extremity (13) of the main wall (12) of the expansion nozzle and forming by the internal part thereof a downwardly extending projection (112) of the main wall (12) of the expansion nozzle.

15. Expansion nozzle according to any one of claims 1 to 12, characterized in that the complementary annular nozzle (140) is constituted by a profiled element that is independent from the main wall (12) of the expansion nozzle, which surrounds the lower part of said main wall (12) and is fixed at the level of the exhaust plane (13) of the expansion nozzle.

16. Expansion nozzle according to claim 15, characterized in that the link between the independent complementary annular nozzle (40) and the main wall (12) of the expansion nozzle is reinforced by fixing legs (47) connecting the gas distribution torus (44) to the main wall (12) of the expansion nozzle.

17. Expansion nozzle according to any one of claims 1 to 16, characterized in that the complementary annular nozzle (20; 40; 120) is metallic.

18. Expansion nozzle according to any one of claims 1 to 16 characterized in that the complementary annular nozzle (20; 40; 120) is made up of composite materials.

**Patentansprüche**

1. Expansionsdüse eines Raketentriebwerks, die in der Atmosphäre und dann im luftleeren Raum funktionieren muß, bestehend aus einer Hauptwandung (12), die von einer Rotationsfläche gebildet wird, die sich zwischen einem Düsenhals (11) und einem hinteren Ende (13) der Expansionsdüse erweitert, und eine konvergierend-divergierende ringförmige Zusatzdüse (20; 40; 120) von geringer Höhe, die die gleiche Achse aufweist wie die Hauptwandung (12), ist außerhalb der genannten Hauptwandung (12) in der Nahe des hinteren Endes (13) der Expansionsdüse angeordnet und weist einen Wulst (24; 44; 124) zur Verteilung der Gase auf, der mit Gaszufuhrmitteln (25; 45; 50) zusammenwirkt, um am Ausgang (23; 43; 123) des divergierenden Teils (22; 42; 122) der ringförmigen Zusatzdüse (20; 40; 120) einen ringförmigen Gasstrom (2) zu erzeugen, der den am hinteren Ende (13) der Hauptwandung (12) der Expansionsdüse abgegebenen Hauptgasstrom (1) umgibt, wobei dieser ringförmige Gasstrom (2) einen Strom mit einem statischem Druck $P_s$ bildet, der deutlich niedriger ist als der Raumdruck $P_a$ und dessen Wert etwa das 0,3-fache bis 0,8-fache des Raumdrucks $P_a$ beträgt, dadurch gekennzeichnet, daß der Wulst (24; 44; 124) zur Verteilung der Gase an der Unterseite durch einen verengten Abschnitt fortgesetzt wird, der für die ringförmige Zusatzdüse (20; 40; 120) die Funktion des konvergierenden Teils erfüllt.

2. Expansionsdüse nach Anspruch 1, dadurch gekennzeichnet, daß das untere Ende der Außenwandung der ringförmigen Zusatzdüse (120) von einem Ablenker (129) fortgesetzt wird, dessen Hohlfläche nach außen gerichtet ist.

3. Expansionsdüse nach einem der Ansprüche 1 und 2, dadurch gekennzeichnet, daß der Wulst zur Verteilung der Gase (124) Innenwände (129) aufweist, die die Homogenität der Gasverteilung verbessern.

4. Expansionsdüse nach einem der Ansprüche 1 bis 3, dadurch gekennzeichnet, daß der Hals (21) der ringförmigen Zusatzdüse (20) durch eine Platte (30) verschlossen ist, die eine Reihe von Löchern (31) aufweist, die in dem ringförmigen Bereich des Halses (21) der genannten Zusatzdüse (20) verteilt sind.

5. Expansionsdüse nach einem der Ansprüche 1 bis 3, dadurch gekennzeichnet, daß der Hals (21) und der divergierende Teil (22) der ringförmigen Zusatzdüse (20) durch eine Reihe von kleinen, nebeneinanderliegenden Düsen (220) ersetzt sind, die in den ringförmigen Bereichen des Halses und des divergierenden Teils der mit einem Wulst (24) zur Verteilung der Gase versehenen Zusatzdüse (20) verteilt sind.

6. Expansionsdüse nach einem der Ansprüche 1 bis 5, dadurch gekennzeichnet, daß die genannten Mittel (25) zur Zufuhr eines Gasstroms zu der ringförmigen Zusatzdüse (20) mit einer außen befindlichen Quelle verbunden sind, die von dem Triebwerk selbst abhängt, wie z. B. eine Vorrichtung zur Gasentnahme aus der Hauptkammer des Triebwerks, aus den Auslässen von Turbinen oder eines Druckgasbehälters.

7. Expansionsdüse nach einem der Ansprüche 1 bis 5, dadurch gekennzeichnet, daß die genannten Mittel (45, 50) zur Zufuhr eines Gasstroms zu der ringförmigen Zusatzdüse (40) eine unabhängige Gasquelle (50) aufweisen, die den Wulst (44) zur Verteilung der Gase im Inneren der konvergierend-divergierenden ringförmigen Zusatzdüse (40) versorgt.

8. Expansionsdüse nach Anspruch 7, dadurch gekennzeichnet, daß die unabhängige Gasquelle (50) einen Gaserzeuger mit einem Festtreibstoff-Formling umfaßt.

9. Expansionsdüse nach Anspruch 7, dadurch gekennzeichnet, daß die unabhängige Gasquelle (50) eine ringförmige Brennkammer umfaßt, die durch eine Treibstoff-Einspritzdüse gespeist wird.

10. Expansionsdüse nach Anspruch 9, dadurch gekennzeichnet, daß die genannte ringförmige Brennkammer in dem Wulst (24; 44) zur Verteilung der Gase in der ringförmigen Zusatzdüse eingeschlossen ist.

11. Expansionsdüse nach einem der Ansprüche 1 bis 10, dadurch gekennzeichnet, daß die ringförmige Zusatzdüse (20; 40; 120) mittels Abtrennmitteln (26; 46; 126) wie z. B. Sprengschnur oder Sprengbolzen abwerfbar ist, wenn der Außendruck unter einen bestimmten Schwellenwert gesunken ist.

12. Expansionsdüse nach einem der Ansprüche 1 bis 11, dadurch gekennzeichnet, daß sie eine zweite konvergierend-divergierende ringförmige Zusatzdüse (60) von geringer Höhe aufweist, die der genannten ringförmigen Zusatzdüse (20) gleicht und diese umgibt, um ihre Wirkung zu verstärken, indem sie einen Fluß bei einem statischem Druck $P_i$ erzeugt, der niedriger ist als der Raumdruck $P_a$ und höher als der statische Druck $P_s$ des ringförmigen Gasstroms (2).

13. Expansionsdüse nach einem der Ansprüche 1 bis 12, dadurch gekennzeichnet, daß die äußere Hauptwandung (12) der Expansionsdüse einen Teil der Innenwand der ringförmigen Zusatzdüse (20) bildet, während die Außenwand der ringförmigen Zusatzdüse (20) von einer Profilrotationsfläche gebildet wird, die an der äußeren Hauptwandung (12) der Expansionsdüse befestigt ist.

14. Expansionsdüse nach einem der Ansprüche 1 bis 12, dadurch gekennzeichnet, daß die ringförmige Zusatzdüse (120) von einem Profilrotationsstück gebildet wird, das am unteren Ende (13) der Hauptwandung (12) der Expansionsdüse befestigt ist.

15. Expansionsdüse nach einem der Ansprüche 1 bis 12, dadurch gekennzeichnet, daß die ringförmige Zusatzdüse (40) von einem unabhängigen Profilstück der Hauptwandung (12) der Expansionsdüse gebildet wird, das den unteren Teil der genannten Hauptwandung (12) umgibt und in Höhe der Ebene des Ausgangs (13) der Expansionsdüse befestigt ist.

16. Expansionsdüse nach Anspruch 15, dadurch gekennzeichnet, daß die Verbindung zwischen der unabhängigen ringförmigen Zusatzdüse (40) und der Hauptwandung (12) der Expansionsdüse durch Befestigungsklammern (47) zwischen dem Wulst (44) zur Verteilung der Gase und der Hauptwandung (12) der Expansionsdüse verstärkt wird.

17. Expansionsdüse nach einem der Ansprüche 1 bis 16, dadurch gekennzeichnet, daß die ringförmige Zusatzdüse (20; 40; 120) aus Metall besteht.

18. Expansionsdüse nach einem der Ansprüche 1 bis 16, dadurch gekennzeichnet, daß die ringförmige Zusatzdüse (20; 40; 120) aus Verbundstoffen hergestellt ist.

Fig.1

Fig.2

Fig.3

Fig.4

Fig.5

Fig.6

Fig.8

Fig.7

Fig.11

Fig.9

Fig.9A

Fig.10

Fig.12